# EUROPÄISCHE PATENTSCHRIFT

(11) **EP 2 659 138 B1**
(45) Veröffentlichungstag und Bekanntmachung des Hinweises auf die Patenterteilung: **14.12.2016**
(21) Anmeldenummer: 11807937.5
(22) Anmeldetag: 23.12.2011
(51) Int. Cl.: F03D 7/02, F03D 7/04, H02J 3/38, H02P 9/04, F03D 9/00

(54) **WINDPARK UND VERFAHREN ZUM BETREIBEN EINES WINDPARKS**
WIND FARM AND METHOD FOR OPERATING A WIND FARM
PARC ÉOLIEN ET PROCÉDÉ D'EXPLOITATION D'UN PARC ÉOLIEN

(30) Priorität: 29.12.2010 DE 102010056457
(43) Veröffentlichungstag der Anmeldung: 06.11.2013
(73) Patentinhaber: Senvion GmbH, 22297 Hamburg (DE)
(72) Erfinder: BLUHM, Roman, 22083 Hamburg (DE); FORTMANN, Jens, 13156 Berlin (DE)
(74) Vertreter: Glawe, Delfs, Moll
(86) Internationale Anmeldenummer: PCT/EP2011/074028
(87) Internationale Veröffentlichungsnummer: WO 2012/089699

(56) Entgegenhaltungen:
- EP-A1- 1 512 869
- WO-A1-02/086315
- WO-A2-2007/006565
- DE-A1-102007 017 870
- Jorge Garcia Martinez: "Voltage Control in Wind Power Plants with Doubly Fed Generators", Aalborg East, Denmark, 1 September 2010 (2010-09-01), pages 1-232, XP055018493, Aalborg, Denmark ISBN: 978-8-78-917992-6 Retrieved from the Internet: URL:http://vbn.aau.dk/files/44428198/jorge _martinez_garcia.pdf [retrieved on 2012-02-06]
- JENS FORTMANN ET AL: 'A NOVEL CENTRALISED WIND FARM CONTROLLER UTILISING VOLTAGE CONTROL CAPABILITY OF WIND TURBINES', [Online] 18 Juli 2008, XP055139449 Gefunden im Internet: <URL:http://www.pscc-central.org/uploads/tx _ethpublications/pscc2008_159.pdf> [gefunden am 2014-09-10]

## Beschreibung

Die Erfindung betrifft ein Verfahren zum Betreiben eines Windparks sowie einen Windpark.

Windparks umfassen in der Regel mehrere Windenergieanlagen, wobei die in den Windenergieanlagen erzeugte Leistung zunächst in ein windparkinternes Netz eingespeist wird. An einem Übergabepunkt wird die Leistung aus dem windparkinternen Netz in ein externes Versorgungsnetz eingespeist. In der Regel handelt es sich bei dem windparkinternen Netz um ein Mittelspannungsnetz, während das externe Versorgungsnetz ein Hochspannungsnetz ist. An dem Übergabepunkt ist dann ein Transformator vorgesehen, mit dem zwischen der Spannung vom Mittelspannungsnetz und der Spannung vom Hochspannungsnetz transformiert wird.

Aufgrund der hohen installierten elektrischen Leistung in einem Windpark ist der Anschluss solcher Windparks an Versorgungsnetze nicht unproblematisch. Insbesondere muss auf die Beibehaltung einer hohen Netzqualität im Versorgungsnetz geachtet werden. Dies soll unter anderem dadurch sichergestellt werden, dass die an ein Versorgungsnetz angeschlossenen Windparks strikte Vorgaben bezüglich der Qualität der eingespeisten Leistung einhalten müssen. So muss bei der in das Versorgungsnetz eingespeisten Leistung bspw. ein gewisses Verhältnis von Blind- und Wirkleistung - dem sog. Leistungsfaktor - eingehalten werden. Auch wenn es in dem Versorgungsnetz zu Störungen kommt, müssen die Anforderungen an die Qualität der eingespeisten Leistung eingehalten werden. Ein Beispiel für solche Störungen sind Spannungseinbrüche, die durch einen Kurzschluss oder durch einen plötzlichen Ausfall von Kraftwerksleistung entstehen können.

In Windparks ist in der Regel eine Parkregelungsvorrichtung, auch "Parkmaster" genannt, vorgesehen, die als übergeordnete Steuerungsvorrichtung für die einzelnen Windenergieanlagen des Windparks fungiert und Steuersignale an die Steuereinrichtungen der einzelnen Windenergieanlagen senden kann. Der Parkregelungsvorrichtung kommt dabei die Aufgabe zu, die Einhaltung der Anforderungen zur Einspeisung von elektrischer Leistung in das Versorgungsnetz zu überwachen und sicherzustellen. Die Parkregelungsvorrichtung ist deshalb dazu ausgebildet, auf die Steuerungsvorrichtungen der einzelnen Windenergieanlagen so einzuwirken, dass am Übergabepunkt die Anforderungen zur Einspeisung von elektrischer Leistung in das Versorgungsnetz tatsächlich erfüllt werden. Der Parkregelungsvorrichtung kommt dabei insbesondere die Aufgabe zu, die in das Versorgungsnetz abgegebene Blindleistung zu überwachen und zu regeln, wozu sie Blindleistungssollwerte für die einzelnen Windenergieanlagen bestimmt und an deren Steuerungseinheiten übermitteln kann. Die Parkregelungsvorrichtung kann sich bei der Regelung der Blindleistung an der an dem Übergabepunkt gemessenen komplexen Leistung oder der Spannung im Versorgungsnetz orientieren.

Kommt es zu einer Störung im Versorgungsnetz berechnet die Parkregelungsvorrichtung eines Windparks gemäß dem Stand der Technik neue Blindleistungssollwerte für die einzelnen Windenergieanlagen des Windparks. Diese Blindleistungssollwerte werden dann an die einzelnen Windenergieanlagen übermittelt und bei deren Steuerung berücksichtigt. Die Berechnung und Übermittlung der Blindleistungssollwerte nimmt einige Zeit in Anspruch, so dass zumindest im Falle einer Störung im Versorgungsnetz die Anforderungen an die Qualität der eingespeisten Leistung durch den Windpark nicht durchgehend erfüllt werden können.

Aus der Veröffentlichung "Voltage Control in wind Power Plants with Doubly Fed Generators" von Jorge Garcia Martinez (Aalborg University, September 2010) ist eine Steuerung von Windenergieanlagen in einem Windpark offenbart, bei der zumindest bei kleineren Netzstörungen der Blindleistungsregler der Parkregelungsvorrichtung bzw. die von diesem bereitgestellten Blindleistungssollwerte eingefroren werden sollen. Nach Wegfall des Netzfehlers wird die Blindleistungsregelung auf Basis der eingefrorenen Werte unmittelbar fortgesetzt. Dabei kann es jedoch zu unerwünschten Schwankungen der Blindleistungssollwerte kommen.

Der Artikel "A novel centralised wind farm controller utilitsing voltage control capability of wind turbines" von Jens Fortmann (16th PSCC, Gaslgow, Schotland, July 14-18, 2008) verzichtet hingegen auf ein Einfrieren der Blindleistungssollwerte mi Falle von Netzfehlern. Vielmehr wird dort im Falle eines Netzfehlers aufgrund schneller Regler an den Windenergieanlagen ausreichend Blindleistung unabhängig von durch einen Parkmaster vorgegebenen Blindleistungssollwert zur Verfügung gestellt.

Der Erfindung liegt die Aufgabe zugrunde, ausgehend vom eingangs genannten Stand der Technik ein Verfahren zum Betreiben eines Windparks sowie einen Windpark zu schaffen, bei dem das Verhalten des Windparks während eines Netzfehlers verbessert wird.

Die Erfindung wird gelöst durch ein Verfahren gemäß dem Hauptanspruch, sowie einen Windpark gemäß dem nebengeordneten Anspruch. Vorteilhafte Weiterbildungen ergeben sich aus den abhängigen Ansprüchen.

Demnach betrifft die Erfindung ein Verfahren zum Betreiben eines Windparks mit mehreren, an ein windparkinternes Netz angeschlossenen Windenergieanlagen mit jeweils einer eigenen Steuerungseinheit zur Berücksichtigung von Sollwerten für die Blindleistung, einem Übergabepunkt, an der die in dem Windpark erzeugte Leistung von dem windparkinternen Netz in ein Versorgungsnetz übergeben wird, und einer mit den Steuerungseinheiten der Windenergieanlagen verbundenen Parkregelungsvorrichtung zur Regelung der Sollwerte für die Blindleistung, wobei bei Auftreten eines Netzfehlers die Sollwerte für die Blindleistung der Parkregelungsvorrichtung von den Steuerungseinheiten bei der Steuerung der Windenergieanlage nicht berücksichtigt werden und nach Wegfall des Netzfehlers die Sollwerte für die Blindleistung der Parkregelungsvorrichtung von den Steuerungseinheiten bei der Steuerung der Windenergieanlage berücksichtigt werden.

Desweiteren betrifft die Erfindung einen Windpark umfassend mehrere, in ein windparkinternes Netz angeschlossene Windenergieanlagen mit jeweils einer eigenen Steuerungseinheit zur Berücksichtigung von Sollwerten für die Blindleistung, einem Übergabepunkt, an der die von dem Windpark erzeugte elektrische Energie von dem windparkinternen Netz an ein Versorgungsnetz übergeben wird, und einer mit den Steuerungseinheiten der Windenergieanlagen verbundenen Parkregelungsvorrichtung zur Regelung von Sollwerten für die Blindleistung, wobei die Steuerungseinheiten dazu ausgebildet sind, bei Auftreten eines Netzfehlers die Sollwerte für die Blindleistung der Parkregelungsvorrichtung bei der Steuerung der Windenergieanlage nicht zu berücksichtigen und nach Wegfall des Netzfehlers die Sollwerte für die Blindleistung der Parkregelungsvorrichtung bei der Steuerung der Windenergieanlage zu berücksichtigen.

Kommt es aufgrund eines Netzfehlers zu einem Spannungsabfall im Versorgungsnetz, hat dies auch einen Spannungsabfall im windparkinternen Netz zur Folge. Die Steuerungseinrichtungen der einzelnen Windkraftanlagen sind erfindungsgemäß dazu ausgebildet, einen solchen Spannungsabfall erkennen zu können (bspw. über Sensoren und/oder Spannungsmessgeräte) und darauf so zu reagieren, dass Beschädigungen an den Windkraftanlagen bzw. deren Komponenten verhindert werden. In einem solchen Fall werden die Sollwerte für die Blindleistung durch die Steuerungseinrichtungen nicht weiter berücksichtigt. Sobald der Netzfehler behoben ist und somit die Spannung im Versorgungsnetz bzw. dem windparkinternen Netz wieder ein normales Niveau erreicht, legen die Steuerungseinheiten der einzelnen Windenergieanlagen wieder die von der Parksteuerungsvorrichtung übermittelten Sollwerte für Blindleistung der Regelung der Windenergieanlagen zu Grunde.

Es ist möglich, die Parkregelungsvorrichtung während eines Netzfehlers unverändert weiterlaufen zu lassen, auch wenn die Sollwerte für die Blindleistung von den Steuerungseinheiten der einzelnen Windenergieanlagen während des Netzfehlers nicht berücksichtigt werden. Da die Parkregelungsvorrichtung als Eingangswerte jedoch die im Versorgungsnetz gemessene komplexe Leistung oder Spannung berücksichtigt, die sich bei einem Netzfehler stark verändert, kommt es zu einer Veränderung der durch die Parkregelungsvorrichtung vorgegebenen Sollwerte für Blindleistung. Sobald der Netzfehler behoben ist und somit wieder normale Spannung im Versorgungsnetz vorliegt, müssen die durch den Netzfehler veränderten Sollwerte für Blindleistung an die Gegebenheiten nach dem Netzfehler angepasst werden.

Um die Anforderungen an die Einspeisung von Leistung in das Versorgungsnetz direkt nach dem Beheben eines Netzfehlers erfüllen zu können, ist es alternativ möglich, bei einer Netzstörung die Sollwerte für Blindleistung auf 0 zu setzen. Gleichzeitig werden durch die Steuerungseinheiten der Windenergieanlagen auch die Sollwerte für die Wirkleistung auf 0 gesetzt. Nach Beheben des Netzfehlers kann die Parkregelungsvorrichtung dann ausgehend von diesen 0-Werten die Sollwerte für Blindleistung wieder verändern bis sie einen Wert erreichen, der zum einen den Anforderungen an die Einspeisung von Leistung in das Versorgungsnetz gerecht wird und gleichzeitig die Einspeisung der durch die Windenergieanlagen insgesamt erzeugbaren Leistung gewährleistet.

Die vorbeschriebene Anpassung der der Sollwerte für die Blindleistung nach Wegfall des Netzfehlers kann einige Zeit in Anspruch nehmen, in denen ggf. die Anforderungen an die Einspeisung von Leistung in das Versorgungsnetz nicht durchgehend erfüllt werden oder es zu unerwünschten Spannungssprüngen im windparkinternen Netz (und damit auch im Versorgungsnetz) kommt, wenn nach Beheben eines Netzfehlers zunächst die gesamte von dem Windpark vor Eintritt des Netzfehlers eingespeiste Leistung fehlt und erst langsam wieder auf das Niveau von vor dem Netzfehler hochgefahren wird. Es ist daher erfindungsgemäß vorgesehen, dass bei Auftreten eines Netzfehlers im Versorgungsnetz die Sollwerte für die Blindleistung in der Parkregelungsvorrichtung eingefroren werden und nach Wegfall des Netzfehlers im Versorgungsnetz die Regelung auf Basis der eingefrorenen Sollwerte für die Blindleistung fortgeführt wird. Für dieses Einfrieren der Sollwerte für die Blindleistung kann ggf. unabhängiger Schutz beansprucht werden.

"Eingefrorene Werte" bedeutet, dass entsprechende Werte konstant gehalten werden. Der Ausgang der Regelung wird dabei unverändert gelassen, unabhängig davon ob die Regelung oder ein Teil davon versucht, diese Werte zu verändern. Der Ausgang der Regelung bleibt bspw. dann unverändert, wenn am Ausgang der Regelung der Momentanwert der Regelung angelegt und die Regelung ansonsten deaktiviert wird. Alternativ ist es möglich, die Regelung kurzzuschließen oder die Regelung anzuhalten. Bei einem PI- oder PID-Regler kann beim Einfrieren auch der I-Anteil und/oder der P-Anteil konstant gehalten werden. "Die Regelung auf Basis der eingefrorenen Werte fortzuführen" bedeutet, dass nach Beendigung des Einfrierens von Werten die Regelung ausgehend von den vormals eingefrorenen Werten zu regeln.

Insbesondere bei kurzzeitigen Netzfehlern sind die Sollwerte für die Blindleistung in einem Windpark vor dem Eintritt des Netzfehlers praktisch identisch zu den idealen Sollwerten für die Blindleistung nach Wegfall des kurzzeitigen Netzfehlers. Zumindest liegen die Sollwerte von vor dem Netzfehler so nah an den idealen Sollwerten nach dem Netzfehler, dass bei einer ggf. vorhandenen Abweichung die Anforderungen für die Einspeisung von Leistung in ein Versorgungsnetz dennoch erfüllt werden. Außerdem sind die vorgenannten Abweichungen in der Regel so klein, dass sie innerhalb kürzester Zeit durch die Regelung der Parkregelungsvorrichtung beseitigt werden können.

Die zum Schutz der einzelnen Windenergieanlagen bzw. derer Komponenten erforderlichen Regelvorgänge während Netzfehlern werden durch die Steuerungseinheiten an den einzelnen Windenergieanlagen durchgeführt. Durch die beschriebene Lösung wird jedoch sichergestellt, dass die Steuerungseinheiten der einzelnen Windenergieanlagen nach Wegfall der Netzfehler ihrer Steuerung solche Sollwerte für Wirk- und Blindleistung zugrunde legen, dass die gesamte im Windpark generierte Energie am Übergabepunkt den Anforderungen für die Einspeisung in das Versorgungsnetz erfüllt.

Die Sollwerte für die Blindleistung können vorzugsweise in Form von Blindleistungssollwerten oder Spannungssollwerten vorliegen. Liegen sie als Blindleistungssollwerte vor, können sie direkt von den Steuerungseinrichtungen der Windenergieanlagen berücksichtigt werden. Liegen die Sollwerte für die Blindleistung als Spannungssollwerte vor, können die Steuerungseinrichtungen der Windenergieanlagen aus der Differenz zwischen Spannungssollwerten und der im windparkinternen Netz an den einzelnen Windenergieanlagen vorliegenden Spannung die gewünschte Blindleistung ermitteln. Eine entsprechende lokale Spannungsregelung bei der Windenergieanlage kann durch einen P-Regler realisiert werden.

Die Sollwerte für die Blindleistung können vorzugsweise aus der komplexen Leistung und/oder der Spannung im Versorgungsnetz ermittelt werden. Die komplexe Leistung bzw. die Spannung im Versorgungsnetz kann dabei am Übergabepunkt gemessen und der Parkregelungsvorrichtung zugeführt werden. Die Parkregelungsvorrichtung generiert daraus dann Sollwerte für die Blindleistung. Es können der Parkregelungsvorrichtung aber bspw. auch vom Netzbetreiber Sollwerte übermittelt werden, welche die Parkregelungsvorrichtung dann in Sollwerte für die Blindleistung umsetzt und den Steuerungseinheiten der einzelnen Windenergieanlangen übermittelt.

Vorzugsweise wird ein Absinken der Spannung im Versorgungsnetz als Netzfehler erkannt. Zur Feststellung eines solchen Spannungsabfalls kann auf die am Übergabepunkt gemessene Spannung zurückgegriffen werden. Es ist aber auch möglich, dass die Parkregelungsvorrichtung ein Steuersignal von dem Betreiber des Versorgungsnetzes empfängt, welches einen Netzfehler anzeigt.

Es ist weiter bevorzugt, dass eine Rücksetzverzögerung vorgesehen ist, bevor die Parkregelungsvorrichtung nach Wegfall eines Netzfehlers die Regelung auf Basis der eingefrorenen Werte fortführt. Mit anderen Worten soll die Parkregelungsvorrichtung eine gewisse Zeit warten, bevor sie nach Wegfall eines Netzfehlers wieder mit der Regelung von Sollwerten für die Blindleistung beginnt. Während dieser Rücksetzverzögerung werden den Steuerungseinheiten weiterhin die eingefrorenen Sollwerte für die Blindleistung übermittelt. Dadurch kann sichergestellt werden, dass die dynamischen Vorgänge nach der Spannungswiederkehr keine negativen Auswirkungen auf die Park-Regelung haben. Die Rücksetzverzögerung liegt vorzugsweise zwischen 0 und 200 ms, weiter vorzugsweise bei 50 ms.

Weiterhin kann vorgesehen sein, dass das Einfrieren der Sollwerte für die Blindleistung unmittelbar bei der Feststellung eines Netzfehlers erfolgt, der das Delay bei Feststellung eines Netzfehlers also 0 ms beträgt. Aufgrund des Einfrierens der Sollwerte für die Blindleistung ist es - anders als im Stand der Technik - nicht schädlich, wenn die Parkregelungsvorrichtung bereits kleine Spannungsspitzen als Netzfehler erkennt und direkt reagiert, d.h. die Sollwerte einfriert. Vorteilhaft ist vielmehr, dass die Parkregelungsvorrichtung bei tatsächlichen Netzfehlern unmittelbar reagiert.

Die Ermittlung von Sollwerten für die Blindleistung in Form von Blindleistungssollwerten oder Spannungssollwerten durch die Parkregelungsvorrichtung kann mit Hilfe eines geschlossenen Regelkreises erfolgen, der ein integrierendes Glied (I-Glied) umfasst. Ein entsprechendes 1-Glied wirkt durch zeitliche Integration der Regelabweichung auf die Stellgröße mit der Gewichtung durch eine Nachstellzeit. Damit es nach dem Wegfall des Netzfehlers nicht zu unerwünschten Effekten durch das I-Glied kommt, wird die Regelabweichung bei Wegfall des Netzfehlers erfindungsgemäß auf null gesetzt. Das Null-Setzen der vorgenannten Regelabweichung erfolgt vorzugsweise erst nach einer vorgegebenen Zeitspanne, die ein Netzfehler andauert, und/oder bei einer vorgegebenen Spannungsabweichung von der Normalspannung des Versorgungsnetzes. Alternativ kann die vorgenannte Regelabweichung während eines Netzfehlers auch konstant gehalten bzw. eingefroren werden.

Der erfindungsgemäße Windpark ist durch Durchführung des erfindungsgemäßen Verfahrens ausgebildet. Es wird daher auf die obigen Erläuterungen verwiesen.

Die Erfindung wird nun anhand vorteilhafter Ausführungsformen unter Bezugnahme auf die Zeichnungen beispielhaft beschrieben. Es zeigen:
- Fig.1:: einen erfindungsgemäßen Windpark;
- Fig.2:: ein Ablaufdiagramm des Verhaltens der Parkregelungsvorrichtung aus Figur 1 bei einem Netzfehler; und
- Fig.3:: ein Schaltbild eines Reglers zum Einfrieren von Sollwerten für die Blindleistung.

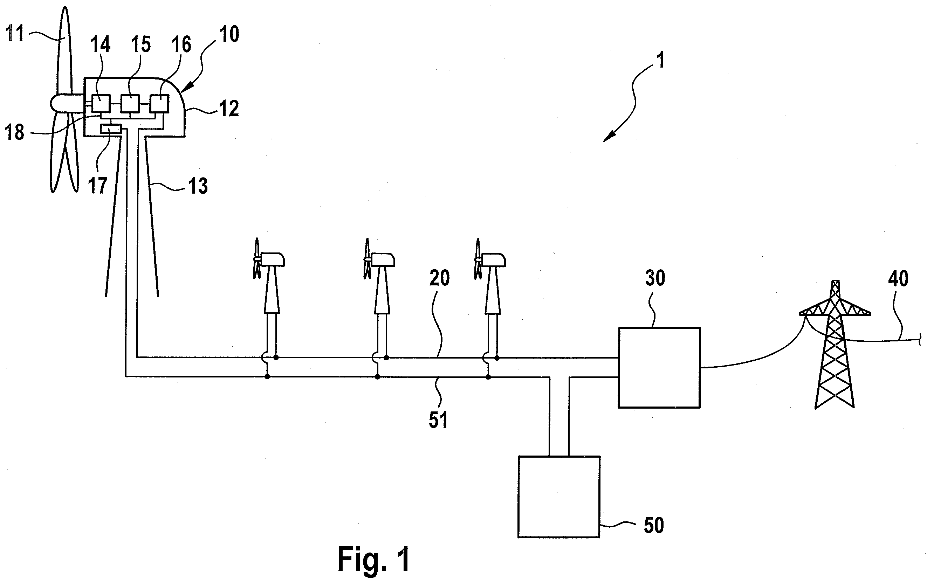

In Fig. 1 ist ein erfindungsgemäßer Windpark 1 dargestellt, der zur Durchführung des erfindungsgemäßen Verfahrens ausgebildet ist.

Der Windpark 1 umfasst dabei mehrere Windenergieanlagen 10, von denen exemplarisch eine detaillierter dargestellt ist. Eine Windenergieanlage 10 umfasst einen Rotor 11, der drehbar an einer Gondel 12 an der Spitze eines Turms 13 angeordnet ist. Der Rotor 11 treibt einen Generator 14 an, bei dem es sich vorzugsweise um einen doppelt gespeisten Asynchrongenerator handeln kann. Mit dem Generator ist ein Umrichter 15 verbunden. Weiterhin ist ein Transformator 16 vorgesehen, der die vom Umrichter 15 ausgegebene Spannung transformiert. Der Betrieb der Windenergieanlage 10 ist kontrolliert von einer Steuereinrichtung 17. Sie wirkt über Steuerleitungen 18 auf die einzelnen Komponenten der Windenergieanlage 10 ein. Neben den dargestellten Komponenten kann die Windenergieanlage 10 selbstverständlich noch weitere Komponenten umfassen, wie bspw. ein Pitchverstellsystem für die Rotorblätter oder Stellmotoren, mit denen die Gondel 12 gegenüber dem Turm 13 verschwenkt werden kann.

Die Windenergieanlage 10 ist so mit einem windparkinternen Netz 20 verbunden, dass die von der Windenergieanlage 10 erzeugte Leistung in das windparkinterne Netz 20 eingespeist wird. Ebenfalls an das windparkinterne Netz 20 angeschlossen ist ein Übergabepunkt30. An diesem Übergabepunkt30 wird die von den Windenergieanlagen 10 erzeugte elektrische Leistung aus dem windparkinternen Netz 20 in ein externes Versorgungsnetz 40 übergeben. Bei dem windparkinternen Netz 20 handelt es sich um ein Mittelspannungsnetz, während das Versorgungsnetz 40 ein Hochspannungsnetz ist. Um die Leistung von dem windparkinternen Netz in das Versorgungsnetz einspeisen zu können, umfasst der Übergabepunkt 30 einen Transformator (nicht dargestellt).

Ebenfalls vorgesehen ist eine Parkregelungsvorrichtung 50, der über Steuerleitungen 51 mit dem Übergabepunkt30 und den Steuerungseinheiten 17 der einzelnen Windenergieanlagen 10 verbunden ist.

Damit die von den Windenergieanlagen 10 erzeugte elektrische Leistung in das Versorgungsnetz 40 eingespeist werden kann, muss sie gewisse Anforderungen erfüllen. Eine dieser Anforderungen besteht insbesondere hinsichtlich des Leistungsfaktors, d. h. dem Verhältnis zwischen Wirk- und Blindleistung. Andere Anforderungen können in Form einer Blindleistungsvorgabe (Q-Sollwert und/oder tan-phi-Sollwert) oder durch die Spannungsstatik gegeben sein. Während die Wirkleistung praktisch allein von dem Wind, der die Rotoren 11 der Windenergieanlagen 10 in Bewegung versetzt, abhängt, kann die erzeugte Blindleistung aktiv geregelt werden, so dass der gewünschte Leistungsfaktor eingehalten wird. In einem Windpark muss nicht jede Windenergieanlage 10 diese Voraussetzungen erfüllen, es ist vielmehr ausreichend, wenn an dem Übergabepunkt30 die Leistung aus dem windparkinternen Netz 20 so vorliegt, dass sie - ggf. nach Transformation - den Anforderungen des Versorgungsnetzes 40 entspricht.

Die Parkregelungsvorrichtung 50 ist dazu ausgebildet, Sollwerte für die Blindleistung zu ermitteln, so dass an dem Übergabepunkt 30 die gewünschte Blindleistung vorliegt. Die Sollwerte für die Blindleistung können anhand von am Übergabepunkt 30 gewonnenen Informationen über das Versorgungsnetz 40 ermittelt werden. Hierbei kann es sich insbesondere um die komplexe Leistung oder die Spannung im windparkinternen Netz oder Versorgungsnetz 40 handeln. Die an dem Übergabepunkt30 gewonnenen Werte werden über die Steuerleitungen 51 an die Parkregelungsvorrichtung 50 übermittelt und dort der Ermittlung der Sollwerte für die Blindleistung zugrunde gelegt.

Die Sollwerte für die Blindleistung werden von der Parkregelungsvorrichtung 50 dann über die Steuerleitungen 51 an die Steuereinrichtungen 17 der einzelnen Windenergieanlagen 10 übermittelt. Die Steuerungseinrichtungen 17 sind dabei so ausgebildet, die Sollwerte für die Blindleistung bei der Steuerung der Windenergieanlagen 10 zu berücksichtigen. Indem die Windenergieanlagen 10 gemäß den empfangenen Sollwerten für die Blindleistung neben der Wirkleistung auch Blindleistung in das windparkinterne Netz 20 einspeisen, wird sichergestellt, dass an dem Übergabepunkt 30 die gewünschte Blindleistung vorliegt.

Kommt es im Versorgungsnetz 40 zu einem Netzfehler, ist damit in der Regel auch ein Spannungsabfall im Versorgungsnetz 40 verbunden. Über den Übergabepunkt 30 überträgt sich dieser Spannungsabfall auch in das windparkinterne Netz 20. Die Steuerungseinrichtungen 17 der Windenergieanlagen 10 sind dazu ausgebildet, im Falle von einem entsprechenden Spannungsabfall die Windenergieanlage 10 so zu steuern, dass es zu keiner Beschädigung der Windenergieanlage 10 oder einer ihrer Komponenten 11-16 kommt und zusätzlich die besonderen Anforderungen zum Betrieb während Netzfehlern eingehalten werden. Während eines Netzfehlers und den damit verbundenen Spannungsabfall auch im windinternen Netz 20 werden die von der Parkregelungsvorrichtung 50 stammenden Sollwerte für die Blindleistung von der Steuerungseinheit 17 der Windenergieanlagen 10 nicht berücksichtigt, um die besonderen Anforderungen zum Betrieb während Netzfehlern möglichst schnell einstellen zu können und insbesondere eine Kommunikationsverzögerung durch die Parkregelungsvorrichtung 50 zu vermeiden. Erst nach Behebung des Netzfehlers und damit einem Spannungsanstieg auf ein "normales" Spannungsniveau werden die Sollwerte für die Blindleistung wieder berücksichtigt.

Es ist vorgesehen, dass die Parkregelungsvorrichtung 50 während eines entsprechenden Netzfehlers die Sollwerte für die Blindleistung einfriert, d. h. konstant hält, und nach Wegfall des Netzfehlers die Regelung auf Basis der eingefrorenen Sollwerte für die Blindleistung fortgesetzt wird. Wie bereits dargestellt, regelt die Parkregelungsvorrichtung 50 die Sollwerte für die Blindleistung anhand der komplexen Leistung oder der Spannung im Versorgungsnetz 40 am Übergabepunkt 30.

Dem Einfrieren der Sollwerte für die Blindleistung liegt die Erkenntnis zugrunde, dass die Sollwerte für die Blindleistung vor einem Netzfehler identisch zu oder zumindest sehr nahe an den idealen Sollwerten für die Blindleistung nach dem Netzfehler liegen. Durch das Einfrieren der Sollwerte bei Auftreten eines Netzfehlers wird sichergestellt, dass den Steuerungseinheiten nach Wegfall des Netzfehlers solche Sollwerte für die Blindleistung übermittelt werden, die identisch oder zumindest sehr nahe an den idealen Sollwerten für die Blindleistung nach dem Netzfehler liegen, so dass am Übergabepunkt 30 die Anforderungen des Versorgungsnetzes 40 zur Einspeisung von Leistung in das Versorgungsnetz 40 erfüllt werden. Die Regelung der Sollwerte für die Blindleistung kann dann auf Basis der vormals eingefrorenen Sollwerte fortgeführt werden. Durch dieses Verfahren wird sichergestellt, dass nicht wie im Stand der Technik die Sollwerte für die Blindleistung durch den Netzausfall so beeinflusst werden, dass sie nach Wegfall des Netzfehlers so weit von den idealen Sollwerten abweichen, dass die Anforderungen zur Einspeisung von Leistung in das Versorgungsnetz 40 am Übergabepunkt 30 nicht mehr erfüllt oder erst nach einem Ausregelvorgang erreicht werden.

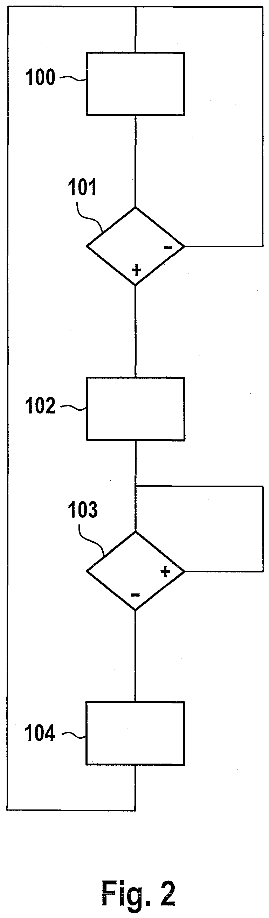

Das Verhalten der Parkregelungsvorrichtung 50 bei einem Netzfehler ist in Fig. 2 näher dargestellt.

In einem ersten Schritt 100 regelt die Parkregelungsvorrichtung 50 die Sollwerte für die Blindleistung mit einem geschlossenen Regelkreis. In einem Schritt 101 wird überprüft, ob ein Netzfehler im Versorgungsnetz 40 vorliegt. Ist dies nicht der Fall, erfolgt eine Rückkehr zu Schritt 100 und die Regelung der Sollwerte für Blindleistungen wird fortgeführt. Wird in Schritt 101 jedoch ein Netzfehler festgestellt, werden in einem Schritt 102 die Sollwerte für die Blindleistung eingefroren. Eine Regelung der Sollwerte für die Blindleistung wie in Schritt 101 erfolgt dann nicht. In Schritt 103 wird festgestellt, ob der Netzfehler weiterhin vorhanden ist. Erst wenn der Netzfehler weggefallen ist, wird mit Schritt 104 fortgefahren. Durch diesen Schritt 104 wird eine Rücksetzverzögerung von 50 ms realisiert, bevor die Regelung der Sollwerte für die Blindleistungen durch Schritt 101 wieder aufgenommen wird. Die Rücksetzverzögerung in Schritt 104 bietet den Vorteil, dass unerwünschte Spannungsschwankungen verhindert werden können, da keine dynamischen Vorgänge nach der Fehlerklärung auf den Regler wirken.

Die Parkregelungsvorrichtung 50 ist so ausgelegt, dass sie die Sollwerte für die Blindleistung bei Feststellung eines Netzfehlers verzögerungsfrei einfriert. Sobald von der Parkregelungsvorrichtung 50 der Wegfall des Netzfehlers registriert wird, ist eine Rücksetzverzögerung von 50 ms vorgesehen, d. h. die Regelung auf Basis der eingefrorenen Sollwerte für die Blindleistung beginnt erst 50 ms nach dem eigentlichen Wegfall des Netzfehlers. Dadurch können unerwünschte Spannungsschwankungen verhindert werden. Um weitere Regelfehler zu vermeiden ist weiterhin vorgesehen, dass - sofern die Parkregelungsvorrichtung 50 zur Regelung der Sollwerte für die Blindleistung ein integrierendes Glied (I-Glied) umfasst - die Regelabweichung bei Wegfall des Netzfehlers auf null gesetzt oder konstant gehalten wird. Dadurch können unerwünschte Effekte durch das I-Glied bei der Wiederaufnahme der Regelung der Sollwerte für die Blindleistung vermieden werden.

Die Sollwerte für die Blindleistung, die von der Parkregelungsvorrichtung 50 an die Steuerungseinheiten 17 der Windenergieanlagen 10 übermittelt werden, können als Blindleistungssollwerte oder als Spannungssollwerte ausgebildet sein. Im letzteren Fall kann die Steuerungseinheit 17 aus der Differenz zwischen der Sollspannung und der Spannung im windparkinternen Netz den jeweiligen Sollwert für die Blindleistung bestimmen.

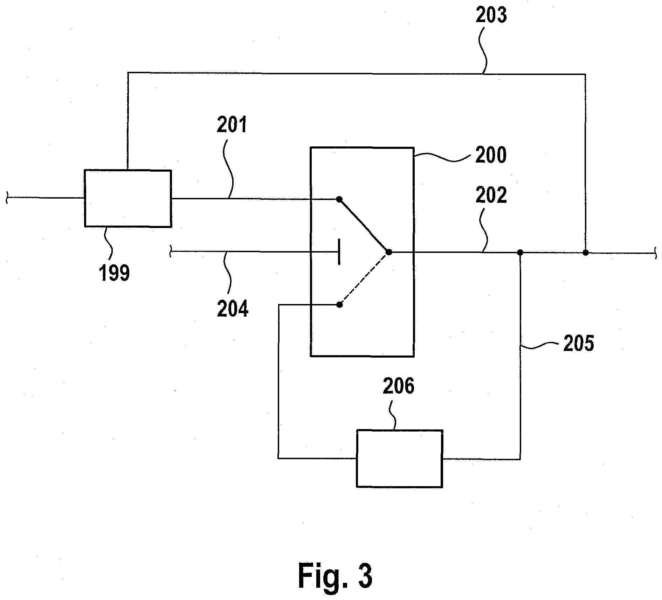

In Fig. 3 ist ein Schaltbild eines Reglers zum Einfrieren der Sollwerte für die Blindleistung skizzenhaft dargestellt. Die durch einen nur schematisch dargestellten geschlossenen Regelkreis 199 ermittelten Sollwerte für die Blindleistung werden einem Stellglied 200 über die Leitung 201 zugeführt. Das Stellglied 200 kann dabei so gestellt sein, dass die über die Leitung 201 empfangenen Sollwerte an der Leitung 202 ausgegeben werden. Die in der Leitung 202 vorliegenden Sollwerte für die Blindleistung können dann an die Steuerungseinheiten 17 der Windenergieanlagen übermittelt werden. Die dort ausgegebenen Werte fließen über die Leitung 203 auch zurück in den geschlossenen Regelkreis 199 zur Bestimmung der Sollwerte für die Blindleistung. Kommt es im Versorgungsnetz 40 zu einem Netzfehler, wird dies durch einen nicht näher dargestellten Regler in der Parkregelungsvorrichtung 50 ermittelt, der dann über die Leitung 204 einen Impuls an die Schalteinheit 200 sendet. Dieser Impuls hat zur Folge, dass das Schaltelement 200 umschaltet, so dass die über die Leitung 201 empfangenen Signale nicht weiter zur Leitung 202 geleitet werden. Vielmehr wird eine Schleife 205 mit einem darin integrierten Verzögerungselement 206 geschlossen. Über die Schleife 205 und das Verzögerungselement 206 werden im Stellelement 200 die an der Ausgangsleitung 202 vorliegenden Sollwerte für die Blindleistung dem Stellelement 200 wieder zugeführt. Ist das Stellelement 200 in einer entsprechenden Stellung, werden die über die Schleife 204 zugeleiteten Sollwerte für die Blindleistung erneut in die Ausgangsleitung 202 eingespeist. Außerdem werden dem geschlossenen Regelkreis 199 die so eingefrorenen Sollwerte zugeführt. Es wird somit das erfindungsgemäße Einfrieren der Sollwerte für die Blindleistung erreicht. Wird festgestellt, dass der Netzfehler im Versorgungsnetz 40 nicht weiter vorliegt, erfolgt ein erneuter Impuls über die Steuerleitung 204, und das Steuerelement 200 wird umgeschaltet. Das Einfrieren der Sollwerte für die Blindleistung wird somit aufgehoben und der geschlossene Regelkreis 199 setzt die Regelung auf Basis der eingefrorenen Werte fort, die er zuvor über die Leitung 203 erhalten hat.

## Patentansprüche

1. Verfahren zum Betreiben eines Windparks (1) mit mehreren, an ein windparkinternes Netz (20) angeschlossenen Windenergieanlagen (10) mit jeweils einer eigenen Steuerungseinheit (17) zur Berücksichtigung von Sollwerten für die Blindleistung, einem Übergabepunkt (30), an der die in dem Windpark (1) erzeugte Leistung von dem windparkinternen Netz (20) in ein Versorgungsnetz (40) übergeben wird, und einer mit den Steuerungseinheiten (17) der Windenergieanlagen (10) verbundenen Parkregelungsvorrichtung (50) zur Regelung der Sollwerte für die Blindleistung,
**dadurch gekennzeichnet, dass**
bei Auftreten eines Netzfehlers die Sollwerte für die Blindleistung der Parkregelungsvorrichtung (50) von den Steuerungseinheiten (17) bei der Steuerung der Windenergieanlage (10) nicht berücksichtigt werden und nach Wegfall des Netzfehlers die Sollwerte für die Blindleistung der Parkregelungsvorrichtung (50) von den Steuerungseinheiten (17) bei der Steuerung der Windenergieanlage (10) berücksichtigt werden, wobei bei Auftreten eines Netzfehlers im Versorgungsnetz (40) die Sollwerte für die Blindleistung in der Parkregelungsvorrichtung (50) eingefroren werden und nach Wegfall des Netzfehlers im Versorgungsnetz die Regelung auf Basis der eingefrorenen Werte fortgeführt wird, und wobei bei Regelung der Sollwerte für die Blindleistung ein I-Glied vorgesehen ist, dessen Regelabweichung bei Wegfall des Netzfehlers auf null gesetzt oder konstant gehalten wird.

2. Verfahren nach Anspruch 1,
**dadurch gekennzeichnet, dass**
bei Feststellung eines Netzfehlers die Sollwerte für die Blindleistung verzögerungsfrei eingefroren werden.

3. Verfahren nach einem der Ansprüche 1 oder 2,
**dadurch gekennzeichnet, dass**
nach Wegfall des Netzfehlers eine Rücksetzverzögerung, vorzugsweise zwischen 0 und 200 ms, eingehalten wird.

4. Verfahren nach einem der Ansprüche 1 bis 3,
**dadurch gekennzeichnet, dass**
die Sollwerte für die Blindleistung in Form von Blindleistungssollwerten oder Spannungssollwerten vorliegen.

5. Verfahren nach einem der Ansprüche 1 bis 4,
**dadurch gekennzeichnet, dass**
ein Absinken der Spannung an dem Übergabepunkt (30) als Netzfehler des Versorgungsnetzes (40) erkannt wird.

6. Windpark (1) umfassend mehrere, in ein windparkinternes Netz (20) angeschlossene Windenergieanlagen (10) mit jeweils einer eigenen Steuerungseinheit (17) zur Berücksichtigung von Sollwerten für die Blindleistung, einem Übergabepunkt (30), an der die von dem Windpark (1) erzeugte elektrische Energie von dem windparkinternen Netz (20) an ein Versorgungsnetz (40) übergeben wird, und einer mit den Steuerungseinheiten (17) der Windenergieanlagen (10) verbundenen Parkregelungsvorrichtung (50) zur Regelung von Sollwerten für die Blindleistung,
**dadurch gekennzeichnet, dass**
die Steuerungseinheiten (17) dazu ausgebildet sind, bei Auftreten eines Netzfehlers die Sollwerte für die Blindleistung der Parkregelungsvorrichtung (50) bei der Steuerung der Windenergieanlage (10) nicht zu berücksichtigen und nach Wegfall des Netzfehlers die Sollwerte für die Blindleistung der Parkregelungsvorrichtung (50) bei der Steuerung der Windenergieanlage (10) zu berücksichtigen, wobei die Parkregelungsvorrichtung (50) dazu ausgebildet ist, bei Auftreten eines Netzfehlers im Versorgungsnetz (40) die Sollwerte für die Blindleistung einzufrieren und nach Wegfall des Netzfehlers im Versorgungsnetz (40) die Regelung auf Basis der eingefrorenen Werte fortzuführen, und wobei Parkregelungsvorrichtung (50) zur Regelung der Sollwerte für die Blindleistung ein I-Glied umfasst, dessen Regelabweichung bei Wegfall des Netzfehlers auf null gesetzt oder konstant gehalten wird.

7. Windpark nach Anspruch 6,
**dadurch gekennzeichnet, dass**
der Windpark (1) zur Durchführung eines Verfahrens gemäß den Ansprüchen 2 bis 5 ausgebildet ist.

## Claims

1. Method for operating a wind farm (1) with a plurality of wind energy installations (10) connected to a grid (20) internal to the wind farm, each with its own control unit (17) for considering setpoint values for the reactive power, a transfer point (30) at which the power generated in the wind farm (1) is passed from the grid (20) internal to the wind farm to a supply grid (40), and with a farm regulatory device (50) for regulating the setpoint values for the reactive power connected with the control units (17) of the wind energy installations (10), **characterized in that**
when a grid fault occurs, the setpoint values for the reactive power of the farm regulatory device (50) are not considered by the control units (17) in controlling the wind energy installation (10), and **in that** after the grid fault has ended, the setpoint values for the reactive power of the farm regulatory device (50) are considered by the control units (17) in controlling the wind energy installation (10), wherein when a grid fault occurs in the supply grid (40) the setpoint values for the reactive power are frozen in the farm regulatory device (50) and, after the grid fault in the supply grid has ended, the regulation is continued on the basis of the frozen values, and wherein an I-branch is provided in the control system for the setpoint values for the reactive power, whose control error is set to zero or held constant after the grid fault was ended.

2. Method according to Claim 1,
**characterized in that**
when a grid fault is detected, the setpoint values for the reactive power are frozen without delay.

3. Method according to one of Claims 1 and 2,
**characterized in that**
after the grid fault has ended, a reset delay, preferably between 0 and 200 ms, is maintained.

4. Method according to one of Claims 1 to 3,
**characterized in that**
the setpoint values for the reactive power are present in the form of setpoint values for reactive power or setpoint values of voltage.

5. Method according to one of Claims 1 to 4,
**characterized in that**
a drop in the voltage at the transfer point (30) is recognized as a grid fault of the supply grid (40).

6. Wind farm (1) comprising a plurality of wind energy installations (10) connected to a grid (20) internal to the wind farm, each with its own control unit (17) for considering setpoint values for the reactive power, a transfer point (30) at which the electrical energy generated in the wind farm (1) is passed from the grid (20) internal to the wind farm to a supply grid (40), and a farm regulatory device (50) for regulating the setpoint values for the reactive power connected with the control units (17) of the wind energy installations (10),
**characterized in that**
the control units (17) are constructed such that when a grid fault occurs, the setpoint values for the reactive power of the farm regulatory device (50) are not considered in controlling the wind energy installation (10) and **in that** after the grid fault has ended, the setpoint values for the reactive power of the farm regulatory device (50) are considered in controlling the wind energy installation (10), wherein the farm regulatory device (50) is constructed such that when a grid fault occurs in the supply grid (40) it freezes the setpoint values for the reactive power, and, after the grid fault in the supply grid (40) has ended, it continues the regulation on the basis of the frozen values, and wherein farm regulatory device (50) for regulating the setpoint values for the reactive power comprises an I-branch, whose control error is set to zero or held constant after the grid fault was ended.

7. Wind farm according to Claim 6,
**characterized in that**
the wind farm (1) is constructed to carry out a method according to Claims 2 to 5.

## Revendications

1. Procédé pour faire fonctionner un parc éolien (1) avec plusieurs éoliennes (10) connectées à un réseau (20) interne au parc éolien, avec chacune une unité de commande (17) propre pour la prise en compte de valeurs de consigne pour la puissance réactive, un point de transfert (30) à la hauteur duquel la puissance produite dans le parc éolien (1) est transférée par le réseau (20) interne au parc éolien dans un réseau d'alimentation (40), et un dispositif de régulation du parc (50) raccordé aux unités de commande (17) des éoliennes (10) pour la régulation des valeurs de consigne pour la puissance réactive,
**caractérisé en ce que**,
en cas de survenue d'une défaillance du réseau, les valeurs de consigne pour la puissance réactive du dispositif de régulation du parc (50) ne sont pas prises en compte par les unités de commande (17) lors de la commande de l'éolienne (10) et, après la disparition de la défaillance du réseau, les valeurs de consigne pour la puissance réactive du dispositif de régulation du parc (50) sont prises en compte par les unités de commande (17) lors de la commande de l'éolienne (10), les valeurs de consigne pour la puissance réactive sont gelées dans le dispositif de régulation du parc (50) en cas de survenue d'une défaillance du réseau dans le réseau d'alimentation (40) et, après la disparition de la défaillance du réseau dans le réseau d'alimentation, la régulation est poursuivie sur la base des valeurs gelées, et un élément I étant prévu lors de la régulation des valeurs de consigne pour la puissance réactive, élément I dont l'écart de régulation est, lors de la disparition de la défaillance du réseau, réglé à zéro ou maintenu constant.

2. Procédé selon la revendication 1,
**caractérisé en ce que**,
en cas de constatation d'une défaillance du réseau, les valeurs de consigne pour la puissance réactive sont gelées sans retard.

3. Procédé selon l'une des revendications 1 ou 2,
**caractérisé en ce que**,
après la disparition de la défaillance du réseau, une temporisation de la remise à l'état initial, de préférence entre 0 et 200 mm, est observée.

4. Procédé selon l'une des revendications 1 à 3,
**caractérisé en ce que**
les valeurs de consigne pour la puissance réactive se présentent sous forme de valeurs de consigne de puissance réactive ou de valeurs de consigne de tension.

5. Procédé selon l'une des revendications 1 à 4,
**caractérisé en ce**
**qu'**une baisse de la tension à la hauteur du point de transfert (30) est identifiée en tant que défaillance du réseau du réseau d'alimentation (40).

6. Parc éolien (1), comprenant plusieurs éoliennes (10) connectées dans un réseau (20) interne au parc éolien, avec chacune une unité de commande (17) propre pour la prise en compte de valeurs de consigne pour la puissance réactive, un point de transfert (30) à la hauteur duquel l'énergie électrique produite par le parc éolien (1) est transférée par le réseau (20) interne au parc éolien à un réseau d'alimentation (40), et un dispositif de régulation du parc (50) raccordé aux unités de commande (17) des éoliennes (10) pour la régulation de valeurs de consigne pour la puissance réactive,
**caractérisé en ce que**
les unités de commande (17) sont constituées pour, en cas de survenue d'une défaillance du réseau, ne pas prendre en compte les valeurs de consigne pour la puissance réactive du dispositif de régulation du parc (50) lors de la commande de l'éolienne (10) et pour, après la disparition de la défaillance du réseau, prendre en compte les valeurs de consigne pour la puissance réactive du dispositif de régulation du parc (50) lors de la commande de l'éolienne (10), le dispositif de régulation du parc (50) étant constitué pour, en cas de survenue d'une défaillance du réseau dans le réseau d'alimentation (40), geler les valeurs de consigne pour la puissance réactive et pour, après la disparition de la défaillance du réseau dans le réseau d'alimentation (40), poursuivre la régulation sur la base des valeurs gelées, et le dispositif de régulation du parc (50) comprenant un élément I pour la régulation des valeurs de consigne pour la puissance réactive, élément I dont l'écart de régulation est, lors de la disparition de la défaillance du réseau, réglé à zéro ou maintenu constant.

7. Parc éolien selon la revendication 6,
**caractérisé en ce que**
le parc éolien (1) est constitué pour la réalisation d'un procédé selon les revendications 2 à 5.
